# EUROPEAN PATENT SPECIFICATION

(11) **EP 4 488 806 B1**
(45) Date of publication and mention of the grant of the patent: **09.12.2026**
(21) Application number: 22931690.6
(22) Date of filing: 10.08.2022
(51) Int. Cl.: G06F 3/023, G06V 20/20, G06F 3/03, G06V 20/64, G06F 3/042, G06V 40/10, G06V 40/20, G06F 3/01

(54) **INPUT RECOGNITION METHOD IN VIRTUAL SCENE, DEVICE AND STORAGE MEDIUM**
EINGABEERKENNUNGSVERFAHREN IN EINER VIRTUELLEN SZENE, VORRICHTUNG UND SPEICHERMEDIUM
PROCÉDÉ DE RECONNAISSANCE D'ENTRÉE DANS UNE SCÈNE VIRTUELLE, DISPOSITIF ET SUPPORT DE STOCKAGE

(30) Priority: 16.03.2022 CN 202210261992
(43) Date of publication of application: 08.01.2025
(73) Proprietor: Chimeta Limited, Shanghai 200120 (CN)
(72) Inventor: PAN, Jong-guang, Shanghai 200122 (CN); WEI, Boqin, Shanghai 200122 (CN)
(74) Representative: Renaudo, Adrien Hanouar
(86) International application number: PCT/CN2022/111516
(87) International publication number: WO 2023/173668

(56) References cited:
- CN-A- 112 541 375
- CN-A- 113 190 109
- CN-A- 113 238 650
- CN-A- 113 282 168
- CN-A- 114 690 900
- JP-A- 2014 165 660
- JP-A- 2014 165 660
- US-A1- 2020 286 246
- US-B2- 11 947 729

## Description

### CROSS-REFERENCE TO RELATED APPLICATIONS

The present disclosure refers to Chinese Patent Application No. 202210261992.8, filed on March 06, 2022, and entitled "An Input Recognition Method in Virtual Scene, Device and Storage Medium", which is hereby incorporated by reference in its entirety.

### TECHNICAL FIELD

The embodiments of present disclosure relate to the field of virtual reality or augmented reality technology, and in particular to an input recognition method in virtual scene, device and storage medium.

### BACKGROUND

With the rapid development of related technologies such as virtual reality, augmented reality and mixed reality, head-mounted smart devices are constantly being innovated and the user experience is gradually improving, such as head-mounted virtual reality glasses, head-mounted mixed reality glasses and other smart glasses.

In the prior art, smart glasses can be used to generate virtual interfaces such as holographic keyboards and holographic screens, and a controller or special sensor device can be used to determine whether the user has interacted with the virtual interface, allowing the user to use the keyboard and screen in the virtual world.

However, in this way, the user still needs to interact with the real-world controller or special sensor device, which makes the user's immersion and sense of reality poor. Therefore, a solution is urgently needed.

The following reference represents prior art relevant to the present invention. CN113238650A (also published as US11947729B2) discloses a gesture recognition method for a virtual reality apparatus using a binocular camera, recognizing hand bone points and calculating three-dimensional fingertip coordinates by binocular ranging to recognize a pinching gesture.

### SUMMARY

The present invention is defined by the independent claims. The dependent claims define further advantageous embodiments. It shall also be noted that the references made through this description to an "embodiment", "example", "aspect" or "configuration" may point to alternative aspects related to the invention but do not necessarily correspond to real realisations of it. The actual embodiments of the invention fall within the scope of the appended claims. It is to be understood that other examples can be practiced, and various modifications and structural changes can be made to these actual embodiments of the invention without departing from the scope of the claims, as would be understood by one of ordinary skill in the art.

The embodiments of the present disclosure provide an input recognition method in a virtual scene, a device, and a storage medium, so that a user can perform an input operation without the aid of additional hardware, thereby reducing hardware costs.

Embodiments of the present disclosure provide an input recognition method in a virtual scene, which is applied to a smart device, including: identifying a hand key point of a user from a binocular image obtained by taking a hand by a binocular camera; calculating a fingertip coordinate by using a binocular positioning algorithm, based on a position of the hand key point in the binocular image; comparing the fingertip coordinate with at least one virtual input interface in the virtual scene; if the fingertip position and a target virtual input interface in the at least one virtual input interface satisfy a set position rule, determining the user performs an input operation via the target virtual input interface.

Further optionally, the identifying a hand key point of a user from a binocular image obtained by taking a hand by a binocular camera, includes: for any monocular image in the binocular image, detecting a hand area from the monocular image by using a target detection algorithm; segmenting a foreground image corresponding to the hand area from the monocular image; and identifying the foreground image by using a preset hand key point recognition model to obtain the hand key point in the monocular image.

Further optionally, the calculating a fingertip coordinate by using a binocular positioning algorithm, based on a position of the hand key point in the binocular image, includes: for any finger of the user, determining whether the identified hand key point comprises a fingertip joint point of the finger; if the hand key point comprises the fingertip joint point of the finger, calculating the position of the fingertip joint point of the finger in the virtual scene by using the binocular positioning algorithm according to the position of the fingertip joint point in the binocular image as the fingertip coordinate of the finger.

Further optionally, the method further includes: if the hand key point does not comprise the fingertip joint point of the finger, calculating a bending angle of the finger according to the position of the visible key point on the finger in the binocular image and a finger joint associated feature when performing the input operation; calculating the fingertip coordinate of the finger according to the bending angle of the finger and the position of the visible key point on the finger in the binocular image.

Further optionally, the finger includes: a first knuckle close to a palm, a second knuckle connected to the first knuckle, and a fingertip knuckle connected to the second knuckle; the calculating a bending angle of the finger according to the position of the visible key point on the finger in the binocular image and a finger joint associated feature when performing the input operation, comprises: determining an actual length of the first knuckle, the second knuckle, and the fingertip knuckle of the finger respectively; calculating an observed length of the first knuckle, the second knuckle and the fingertip knuckle respectively according to the identified coordinate of the hand key point; if the observed length of the second knuckle and/or the fingertip knuckle is less than the corresponding actual length, determining the bending angle of the finger is less than 90 degrees, and calculating the bending angle of the finger according to the observed length and the actual length of the second knuckle and/or according to the observed length and the actual length of the fingertip knuckle; if the observed length of the second knuckle and/or the fingertip knuckle is 0, determining the bending angle of the finger is 90 degrees.

Further optionally, the calculating the fingertip coordinate of the finger according to the bending angle of the finger and the position of the visible key point on the finger in the binocular image, includes: if the bending angle of the finger is less than 90 degrees, calculating the fingertip coordinate of the finger according to a position of a starting joint point of the second knuckle, the bending angle of the finger, the actual length of the second knuckle and the actual length of the fingertip knuckle; if the bending angle of the finger is 90 degrees, calculating the fingertip position according to the position of the starting joint point of the second finger joint and a distance moved by the first finger joint to the at least one virtual input interface.

Further optionally, if the fingertip position and a target virtual input interface in the at least one virtual input interface satisfy a set position rule, determining the user performs an input operation via the target virtual input interface, includes: if the fingertip position is located on the target virtual input interface, determining the user is touching the target virtual input interface; and/or, if the fingertip position is located on a side of the target virtual input interface away from the user and a distance between the fingertip and the target virtual input interface is greater than a preset distance threshold, determining the user is clicking on the target virtual input interface.

Further optionally, an infrared sensor is installed on the smart device; and the method further includes: collecting a distance value between the infrared sensor and the hand key point by using the infrared sensor; correcting the calculated fingertip position of the user by using the distance value.

Embodiments of the present disclosure further provides a terminal device, including: a memory and a processor; the memory is used to: store one or more computer instructions; the processor is used to execute the one or more computer instructions to: perform the steps in the input recognition method in the virtual scene.

Embodiments of the present disclosure further provides a computer-readable storage medium storing a computer program, wherein when the computer program is executed by a processor, the processor is caused to implement the steps in the input recognition method in the virtual scene.

In the input recognition method in the virtual scene, the device and the storage medium provided by the embodiments of the present disclosure, on the basis of recognized position of hand key point, fingertip coordinate can be calculated by using a binocular positioning algorithm, the fingertip coordinate is compared with at least one virtual input interface in the virtual scene, and if fingertip position and a target virtual input interface in the at least one virtual input interface satisfy a set position rule, it is determined that a user executes an input operation by means of the target virtual input interface. In this way, a fingertip position of a user can be calculated by means of the binocular positioning algorithm, and the user does not need to interact with a controller or a special sensor device in the real world, further enhancing a sense of immersion and a sense of reality of the virtual scene.

### BRIEF DESCRIPTION OF THE DRAWINGS

In order to describe the embodiments of the present disclosure or the technical solutions in the prior art more clearly, drawings required to be used in the embodiments or the description of the prior art will be briefly introduced below. Apparently, the drawings in the description below are some embodiments of the present disclosure. Those of ordinary skill in the art may also obtain other drawings according to the provided drawings without involving any inventive effort.
FIG. 1 is a schematic diagram of a flow chart of an input recognition method provided by an exemplary embodiment of the present disclosure;
FIG. 2 is a schematic diagram of a key point of a hand provided by an exemplary embodiment of the present disclosure;
FIG. 3 is a schematic diagram of target detection provided by an exemplary embodiment of the present disclosure;
FIG. 4 is a schematic diagram of foreground image segmentation provided by an exemplary embodiment of the present disclosure;
FIG. 5 is a schematic diagram of a binocular positioning algorithm provided by an exemplary embodiment of the present disclosure;
FIG. 6 is an imaging principle diagram of a binocular positioning algorithm provided by an exemplary embodiment of the present disclosure;
FIG. 7 is a schematic diagram of a finger joint provided by an exemplary embodiment of the present disclosure;
FIG. 8 is a schematic diagram of hand key point position calculation provided by an exemplary embodiment of the present disclosure;
FIG. 9 is a schematic diagram of a virtual input interface provided by an exemplary embodiment of the present disclosure;
FIG. 10 is a schematic diagram of binocular camera parallax provided by an exemplary embodiment of the present disclosure; and
FIG. 11 is a schematic diagram of a terminal device provided by an exemplary embodiment of the present disclosure.

### DETAILED DESCRIPTION OF EXAMPLE EMBODIMENTS

For making the purposes, technical solutions and advantages of the embodiments of the present disclosure clearer, the technical solutions in the embodiments of the present disclosure will be clearly and completely described below in combination with the drawings in the embodiments of the present disclosure. It is apparent that the described embodiments are not all embodiments but part of embodiments of the present disclosure. All other embodiments obtained by those of ordinary skill in the art on the basis of the embodiments in the present disclosure without creative work shall fall within the scope of protection of the present disclosure.

In the prior art, smart glasses can be used to generate a virtual interface such as a holographic keyboard and a holographic screen, and a controller or special sensor device can be used to determine whether the user has interacted with the virtual interface, allowing the user to use the keyboard and screen in the virtual world. However, in this way, a user still needs to interact with a real-world controller or a special sensor device, which greatly reduces the user's sense of immersion and reality. In view of the above technical problems, a solution is provided in some embodiments of the present disclosure. The technical solutions provided by the embodiments of the present disclosure will be described in detail below with reference to the accompanying drawings.

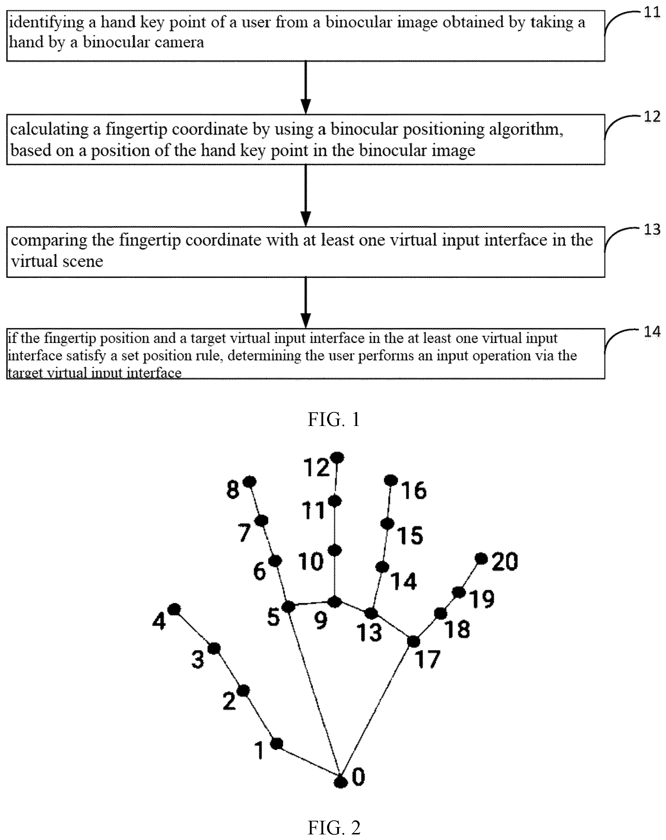

FIG. 1 is a schematic diagram of a flow chart of an input recognition method provided by an exemplary embodiment of the present disclosure. As shown in FIG. 1, the method includes:
step 11: identifying a hand key point of a user from a binocular image obtained by taking a hand by a binocular camera;
step 12: calculating a fingertip coordinate by using a binocular positioning algorithm, based on a position of the hand key point in the binocular image;
step 13: comparing the fingertip coordinate with at least one virtual input interface in the virtual scene; and
step 14: if the fingertip position and a target virtual input interface in the at least one virtual input interface satisfy a set position rule, determining the user performs an input operation via the target virtual input interface.

This embodiment can be executed by a smart device, which can be implemented as a wearable device, such as VR (Virtual Reality) glasses, MR (Mixed Reality) glasses, a VR head-mounted display device (Head-Mounted Display, HMD), etc., which is not limited in this embodiment. Taking the VR glasses as an example, when displaying a virtual scene, the VR glasses can generate at least one virtual input interface in the virtual scene, for example, may include: at least one virtual input interface such as a virtual keyboard and/or a virtual screen. A user can interact with these virtual input interfaces in the virtual scene.

In this embodiment, the smart device can obtain a binocular image of a hand captured by a binocular camera. The binocular camera may be installed on a smart device, or may be installed at other locations where both hands can be photographed, which is not limited in this embodiment. The binocular camera includes: two monocular cameras. A binocular image includes: two monocular images.

The smart device can identify the hands key point of a user from the binocular image obtained by capturing the hand with a binocular camera. The schematic diagram of the hand key point is shown in FIG. 2, and may include each finger joint, fingertip or any position on the hand of the user.

After identifying the hand key point of the user, the fingertip coordinate can be calculated by using a binocular positioning algorithm based on the position of the hand key point in the binocular image. The binocular positioning algorithm, also called the binocular vision algorithm, is an algorithm that simulates the principle of human vision and uses a computer to passively perceive distance. The main principle is: observe one object from two points, obtain images from different perspectives, and calculate the position of the object through the matching relationship between pixels between images and the principle of triangulation.

After the fingertip position is calculated, the fingertip coordinate may be compared with at least one virtual input interface in the virtual scene. If the fingertip position and a target virtual input interface in at least one virtual input interface satisfy a set position rule, it is determined that the user performs an input operation via the target virtual input interface. The input operation performed by the user includes at least: clicking, long pressing or touching, etc..

In this embodiment, the smart device can calculate the fingertip coordinate based on the position of the identified hand key point using a binocular positioning algorithm, and compare the fingertip coordinate with at least one virtual input interface in the virtual scene. If the fingertip position and the target virtual input interface in at least one virtual input interface meet the set position rule, it is determined that the user performs an input operation through the target virtual input interface. In this way, the position of the user's fingertip can be calculated through a binocular positioning algorithm, and the user does not need to interact with a real-world controller or a special sensor device, further enhancing the immersion and realism of the virtual scene.

In addition, based on this embodiment, the hand image can be captured with the help of an existing binocular camera on the smart device or in the environment, so that the user can perform input operations without the help of additional hardware, thereby reducing hardware costs.

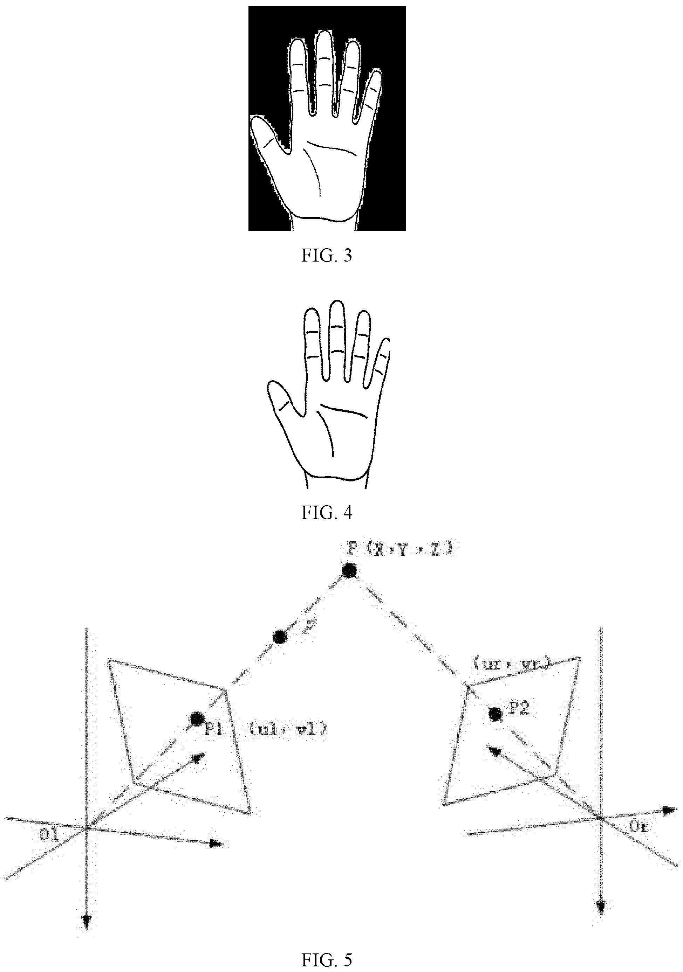

In some optional embodiments, the operation of "identifying a hand key point of a user from a binocular image obtained by taking a hand by a binocular camera" described in the above embodiment can be implemented based on the following steps: As shown in FIG. 3, for any monocular image in the binocular image, the smart device can detect the hand area from the monocular image through the object detection algorithm (Object Detection). The target detection algorithm can be implemented based on R-CNN (Region-Convolutional Neural Network).

The target detection algorithm will be further explained below.

For one picture, said algorithm can generate about 2,000 candidate areas according to the picture, then change each candidate area to a fixed size and send the changed candidate area to the CNN (Convolutional Neural Network) model, which can then obtain the feature vector corresponding to each candidate area. The feature vector can then be sent to a classifier that contains multiple categories to predict the probability value of the image in the candidate area belonging to each category. For example, the classifier predicts that the probability that the image in the ten candidate areas 1-10 belongs to the hand area is 95%, and the probability that it belongs to the face is 20%, and thus the candidate areas 1-10 can be detected as the hand area. In this way, the smart device can detect the hand area in any monocular image more accurately.

In actual scenarios, when a user uses a smart device to interact with a virtual scene, the user's hand is usually the object closest to the user. Therefore, the foreground image in a monocular image taken by any camera is usually the user's hand area. Based on this, the smart device can segment the foreground image corresponding to the hand area from the monocular image, as shown in FIG. 4. Through this implementation, the smart device can segment the hand area, reduce the interference of other areas on subsequent recognition, and then identify the hand area in a targeted manner, thereby improving recognition efficiency.

Based on the above steps, as shown in FIG. 2, the smart device can use a preset hand key point recognition model to recognize the foreground image and obtain the hand key point in the monocular image. It should be noted that the hand key point recognition model can be pre-trained. For example, a hand image is input into the model to obtain the model recognition result of the hand key point, and the parameter of the model is further adjusted according to the error between the model recognition result and the expected result, and the model with adjusted parameter is used to recognize the hand key point again. Through this continuous iteration way, the hand key point recognition model can more accurately identify the foreground image corresponding to the hand area to obtain the hand key point in the monocular image.

It should be noted that in actual scenarios, when a user performs an input operation, his or her fingertip may be blocked by other parts of the hand, causing the binocular camera to be unable to capture the user's fingertip, which in turn results in the lack of fingertip joint point in the identified hand key point. The fingertip joint point is shown as 4, 8, 12, 16 and 20 in FIG. 2. On the contrary, if any of the binocular cameras can capture the user's fingertip, the identified hand key point may include the fingertip joint point.

Optionally, after the process of identifying the hand key points of the user as described in the above embodiment, the fingertip coordinate is calculated by using a binocular positioning algorithm based on the position of the hand key point in the binocular image, which can be achieved based on the following steps:
step S1: for any finger of the user, determining whether the identified hand key point include the fingertip joint point; and
step S2: if the hand key point includes the fingertip joint point of the finger, calculating the position of the fingertip joint point in the virtual scene by using a binocular positioning algorithm according to the position of the fingertip joint point in the binocular image as the fingertip coordinate.

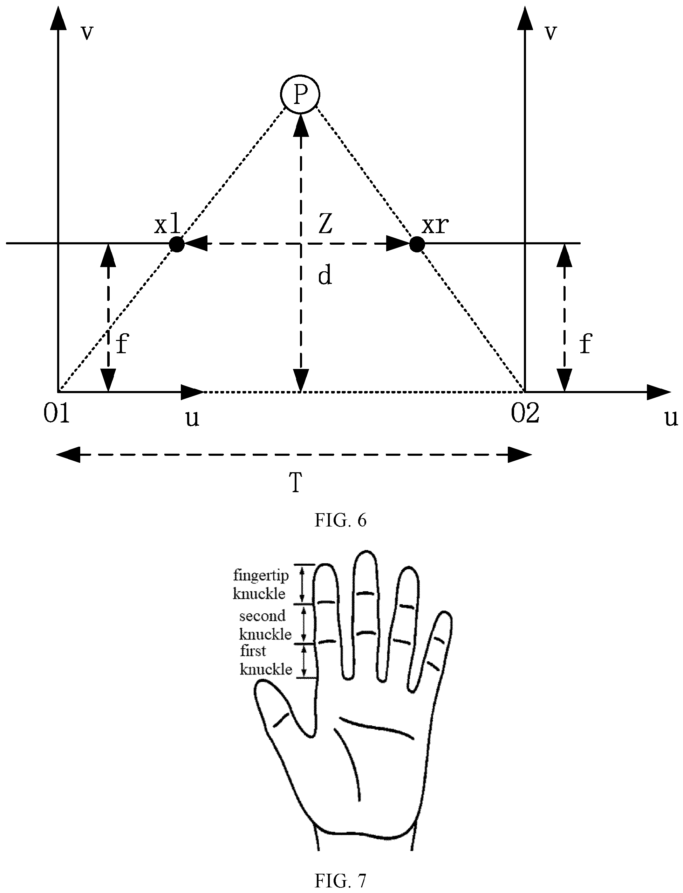

The binocular positioning algorithm will be described in detail below in conjunction with FIG. 5 and FIG. 6.

The two quadrilaterals on the left and right in FIG. 5 represent the camera planes of the left and right cameras respectively, point P represents the target object (the fingertip joint point of the user's finger), P1 and P2 are the projections of point P on the two camera planes respectively, and the image points of a point P (X, Y, Z) in the world space on the imaging surfaces of the left and right cameras are P1 (ul, vl) and P2 (ur, vr) respectively. These two image points are images of the same object point P in the world space (world coordinate system) and are called "conjugate points". The two conjugate image points are connected by lines with the optical centers Ol and Or of their respective cameras, namely the projection lines PlOl and P2Or, and their intersection is the object point P (X, Y, Z) in the world space (world coordinate system).

Specifically, FIG. 6 is a simple schematic diagram of the principle of head-up binocular stereo imaging, where the distance between the projection centers of the two cameras, i.e., the baseline distance, is T. The origin of the camera coordinate system is at the optical center of the camera lens. The coordinate system is shown in FIG. 6. The imaging plane of the camera is behind the optical center of the lens. The left and right imaging planes are drawn at a point f in front of the optical center of the lens. The u-axis and v-axis of this virtual image plane coordinate system O1uv are consistent with the x-axis and y-axis directions of the camera coordinate system, which can simplify the calculation process. The origin of the left and right image coordinate systems is at the focal points O1 and O2 of the camera optical axis and the plane. The corresponding coordinates of point P in the left image and the right image are xl(u1, v1) and xr(u2, v2) respectively. Assuming that the images of the two cameras are on the same plane, the Y coordinates of the image coordinates of point P are the same, that is, v1 = v2, which is obtained from the triangular geometric relationship: $u 1 = f ⋅ \frac{x}{z} , u 2 = f ⋅ \frac{\left(x-T\right)}{z} ⋅ v 1 , v 1 = v 2 = f ⋅ \frac{y}{z}$

The above (x, y, z) is the coordinate of point P in the left camera coordinate system, T is the baseline distance, f is the focal length of the two cameras, (u1, v1) and (u1, v2) are the coordinates of point P in the left image and the right image respectively. Disparity is defined as the position difference d between a point and its corresponding points in two images: $d = \left(u1-u2\right) = \frac{f ⋅ T}{z}$

From this, the coordinate of point P in the left camera coordinate system can be calculated as: $x = \frac{T ⋅ u 1}{d} , y = \frac{T ⋅ v}{d} , z = \frac{T ⋅ f}{d}$

Based on the above process, if the corresponding points of the fingertip joint point on the left and right camera imaging planes (i.e., the position of the fingertip joint point in the binocular image) can be found, and the internal and external parameters of the camera can be obtained through camera calibration, the three-dimensional coordinate of the fingertip joint point in the world coordinate system can be determined based on the above formula.

Optionally, a correspondence can be preset between the coordinate system of the virtual scene generated by the smart device and the three-dimensional coordinate in the world coordinate system, and then based on the correspondence, the three-dimensional coordinate of the fingertip joint point obtained above is converted into the coordinate system of the virtual scene, so as to obtain the position of the fingertip joint point in the virtual scene and use which as the fingertip coordinate of the finger.

Through the above implementation, when the fingertip joint point is not blocked, the smart device can more accurately calculate the fingertip coordinate of the user's finger through the binocular positioning algorithm.

It should be noted that, as shown in FIG. 7, the finger includes: a first knuckle close to the palm, a second knuckle connected to the first knuckle, and a fingertip knuckle connected to the second knuckle. The knuckles of human fingers follow certain bending patterns when they are bent. For example, most people usually cannot bend the fingertip knuckle without moving the second and first knuckles. For another example, when the fingertip knuckle is gradually bent downward by 20°, the second knuckle will usually bend at a certain angle as the fingertip knuckle is bent. The reason for the above bending pattern is that there is a connection between the various joints of human fingers, that is, the joint connection feature.

Based on the above content, in some optional embodiments, if the fingertip joint point of the user is blocked, the fingertip coordinate is calculated based on the position of the hand key point in the binocular image by using a binocular positioning algorithm, which can also be implemented based on the following steps:
step S3: if the hand key point does not comprise the fingertip joint point of the finger, calculating a bending angle of the finger according to the position of the visible key point on the finger in the binocular image and a finger joint associated feature when performing the input operation; and
step S4: calculating the fingertip coordinate of the finger according to the bending angle of the finger and the position of the visible key point on the finger in the binocular image.

Through this implementation, when the fingertip knuckle of a finger is blocked, the fingertip coordinate can still be calculated through the visible key point and finger joint associated feature.

In step S3, the visible key point refers to the key point that can be detected in the binocular image. For example, if the user's little finger is bent at a certain angle so that the fingertip knuckle of the little finger is blocked by the palm, then the fingertip joint point of the user's little finger will not be recognized, that is, the fingertip joint point of the little finger is an invisible key point. The other hand key point except the fingertip joint point is successfully identified, that is, the other hand key point is visible key point. The bending angle of the finger includes the bending angle of one or more finger joints.

In some optional embodiments, the above step S3 can be implemented based on the following implementations:
determining an actual length of the first knuckle, the second knuckle, and the fingertip knuckle of the finger respectively, and calculating an observed length of the first knuckle, the second knuckle and the fingertip knuckle respectively according to the identified coordinate of the hand key point.

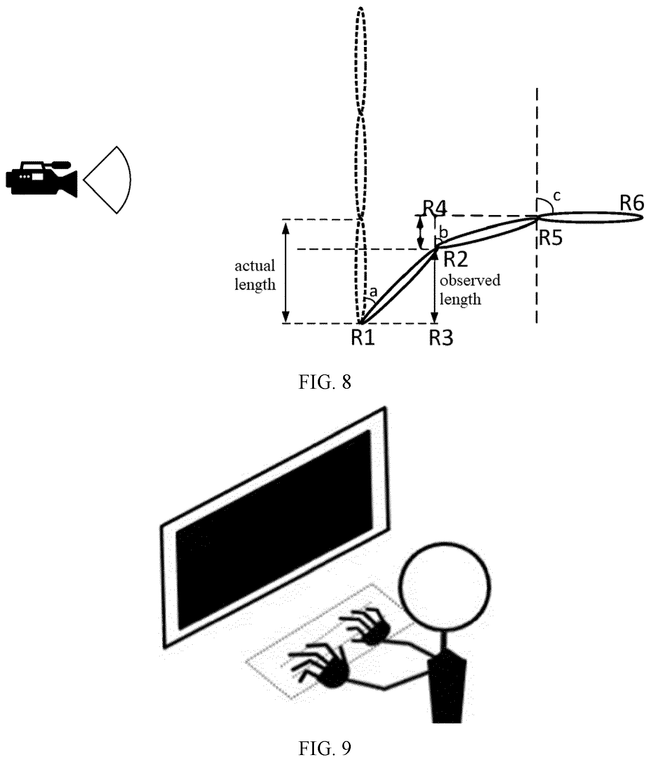

As shown in FIG. 8, the observed length refers to the length of the finger observed from the perspective of the binocular camera. The observed length is the length of each knuckle calculated through the hand key point, that is, the projection length relative to the camera. For example, if the two hand key points corresponding to the first knuckle of a finger are identified as R1 and R2, the observed length of the first knuckle can be calculated according to the coordinates of the two hand key points.

Optionally, if the observed length of the second knuckle is smaller than the actual length corresponding to the second knuckle, or the observed length of the fingertip knuckle is smaller than the actual length corresponding to the fingertip knuckle, or the observed lengths of the second knuckle and the fingertip knuckle are both smaller than their respective actual lengths, it is determined that the bending angle of the finger is less than 90 degrees. In this case, the bending angle of the finger can be calculated based on the observed length and actual length of the second knuckle; or, the bending angle of the finger can be calculated based on the observed length and actual length of the fingertip knuckle; or, the bending angle of the finger can be calculated based on the observed length of the second knuckle, the actual length of the second knuckle, the observed length of the fingertip knuckle, and the actual length of the fingertip knuckle.

The following will provide an exemplary description of how to calculate the bending angle based on the observed length and the actual length in conjunction with FIG. 8.

FIG. 8 illustrates the state of the knuckle after the finger is bent and the key points R1, R2 and R3 corresponding to the knuckle. The first knuckle is R1R2, the second knuckle is R2R5, and the fingertip knuckle is R5R6. As shown in FIG. 8, in the triangle formed by R1, R2 and R3, given R2R3 (observed length) and R1R2 (actual length), the bending angle a of the first knuckle can be calculated. Similarly, in the triangle formed by R4, R2 and R5, given R2R5 (actual length) and R2R4 (observed length), the bending angle b of the second knuckle can be calculated. Similarly, the bending angle c of the third finger joint can be obtained.

Optionally, if the observed length of the second knuckle and/or the fingertip knuckle is 0, it can be considered that the binocular camera does not observe the second knuckle and/or the fingertip knuckle. At this time, according to the finger bending characteristics, it can be assumed that the bending angle of the finger is 90 degrees.

Optionally, based on the above-mentioned bending angle calculation process, the "calculating the fingertip coordinate of the finger according to the bending angle of the finger and the position of the visible key point on the finger in the binocular image" recorded in the above-mentioned embodiment can be implemented by the following implementation method:
Implementation method 1: if the bending angle of the finger is less than 90 degrees, the fingertip coordinate can be calculated based on the position of the starting joint point of the second knuckle, the bending angle of the finger, the actual length of the second knuckle and the actual length of the fingertip knuckle.

As shown in FIG. 8, the starting joint point of the second knuckle is R2. If R2 can be observed, the binocular positioning algorithm can be used to calculate the position of R2. By knowing the position of R2, the actual length of the second knuckle and the bending angle b of the second knuckle, the position of the starting joint point R5 of the fingertip knuckle can be obtained. Furthermore, the fingertip position R6 can be calculated through the position of R5, the bending angle c of the fingertip joint and the actual length of the fingertip joint.

Implementation method 2: if the bending angle of the finger is 90 degrees, the fingertip position is calculated according to the position of the starting joint point of the second knuckle and the distance moved by the first knuckle to at least one virtual input interface.

It should be noted that when the bending angle of the finger is 90 degrees, the user's fingertip can move in the same manner as the first knuckle. For example, if the first knuckle moves downward by 3 cm, the fingertip also moves downward by 3 cm. Based on this, the fingertip position is calculated when the position of the starting joint point of the second knuckle and the distance moved by the first knuckle to at least one virtual input interface are known. The fingertip position calculation problem can be converted into a geometric problem of calculating the end point position when the starting point position, the moving direction of the starting point and the moving distance are known, which will not be repeated here.

In some optional embodiments, after the fingertip position is calculated, the fingertip position can be compared with at least one virtual input interface in the virtual scene, and whether the user performs an input operation can be determined based on the comparison result. The following description will be made by taking any target virtual input interface in the at least one virtual input interface as an example.

Implementation method 1: if the fingertip position is located on the target virtual input interface, it is determined that the user is touching the target virtual input interface.

Implementation method 1: if the fingertip is located on a side of the target virtual input interface away from the user and the distance between the fingertip and the target virtual input interface is greater than a preset distance threshold, it is determined that the user is clicking on the target virtual input interface. The distance threshold may be preset to 1 cm, 2 cm, 5 cm, etc., and this embodiment does not impose any limitation thereto. The above two implementation modes may be performed separately or in combination, and this embodiment does not limit them.

Optionally, the smart device may be equipped with an infrared sensor. After calculating the fingertip position of the user, the smart device can use the infrared sensor to collect the distance value between the infrared sensor and the hand key point. The calculated fingertip position of the user is then corrected using the distance value.

By using this position correction method, the error between the calculated fingertip position and the actual fingertip position can be reduced, thereby further improving the recognition accuracy of user input operation.

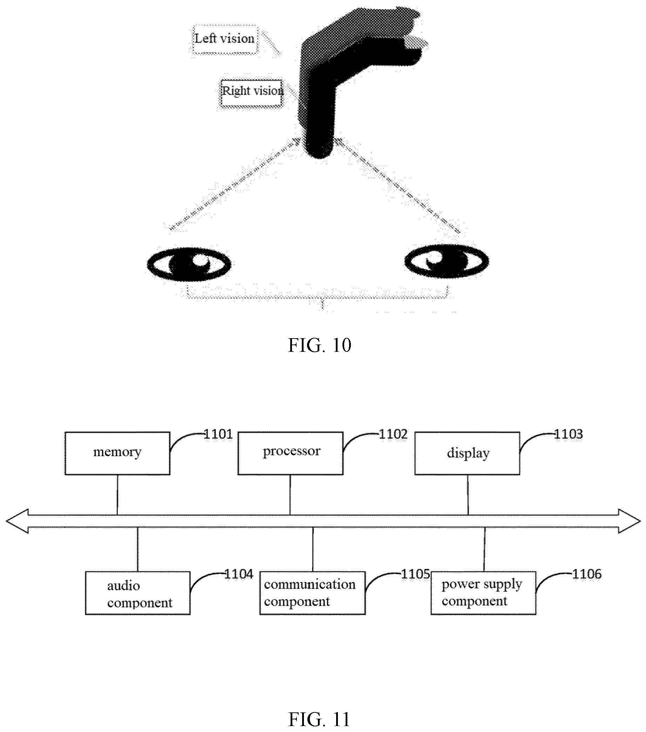

The above input recognition method will be further described below in conjunction with FIG. 9, FIG. 10 and actual application scenarios.

As shown in FIG. 9, the virtual screen and virtual keyboard generated by the VR glasses (smart device) are a virtual three-dimensional plane, and the plane can be used as a cross-border (i.e., a virtual input interface). A user can adjust the positions of the virtual plane and the virtual keyboard to positions that suit them, and can interact with the virtual plane and the virtual keyboard by clicking or pushing and pulling operation buttons. When the user's fingertip crosses the boundary, it is determined that the user is clicking. When the user's fingertip is located on the crossing boundary line, it is determined that the user is touching.

In order to determine whether the user's fingertip has crossed the crossing boundary, the position of the user's fingertip needs to be calculated. The calculation process can utilize at least two cameras on the outside of the VR glasses. The following will explain the case where there are two cameras.

It should be noted that when a user interacts with VR glasses, the user's hand is usually closest to the camera. It is assumed that the user's two hands are the objects closest to the camera and there are no obstacles between the camera and the hands. In addition, as shown in FIG. 10, due to the setting of the binocular camera, there is parallax between the monocular images taken by the two monocular cameras at different viewing angles. VR glasses can calculate the position of the object through the matching relationship between the pixels of the two monocular images and the principle of triangulation.

When the user's fingertip is not blocked by other parts of the hand, the VR glasses can directly calculate the fingertip position of the user through a binocular positioning algorithm, and then determine whether the user's fingertips are on the screen, keyboard or other virtual input interfaces.

Usually, there are three lines on each finger of a person (hereinafter referred to as three-joint lines), which can divide the finger into three parts, namely the first knuckle close to the palm, the second knuckle connected to the first knuckle, and the fingertip knuckle connected to the second knuckle. In addition, there is a bending correlation between the user's various knuckles (finger knuckle association feature).

Based on this, if the user's fingertip is blocked by other parts of the hand, the terminal device can determine the actual length of the user's first knuckle, second knuckle and fingertip knuckle, which can be measured in advance based on the three-joint lines of the hand. In actual scenarios, the back of the user's hand and the first knuckle are usually visible. VR glasses can derive the positions of the second knuckle and the fingertip knuckle based on the bending correlation, the observed length and the actual length of the first knuckle, thereby calculating the fingertip coordinate.

For example, if only the first knuckle can be seen, and the second knuckle and the fingertip knuckle are completely invisible, then it can be assumed that the user's finger is bent at 90°, which means that the distance the first knuckle of the finger moves downward is equal to the distance the fingertip knuckle moves downward. Based on this, the fingertip position can be calculated.

After the fingertip position is calculated, the fingertip position can be compared with the position of the screen, keyboard, and other virtual input interfaces. When the fingertip crosses the virtual input interface and does not exceed the preset touch depth, it can be determined that the user is performing a click operation; when the fingertip is located on the virtual input interface, it is determined that the user is performing a touch operation; when the fingertip crosses the virtual input interface and exceeds the preset touch depth, it can be determined that the user is performing a cancel operation. Optionally, an infrared sensor may be installed on the VR glasses. The infrared sensor can obtain the distance between the infrared sensor and the fingertip position through the ToF (Time of flight) method, so as to further correct the fingertip position to reduce the error between the calculated fingertip position and the actual position of the fingertip.

FIG. 11 is a schematic diagram of the structure of a terminal device provided by an exemplary embodiment of the present disclosure. As shown in FIG. 11, the terminal device includes: a memory 1101 and a processor 1102.

The memory 1101 is used to store computer programs and can be configured to store various other data to support operations on the terminal device. Examples of such data include instructions for any application or method operating on the terminal device, contact data, phone book data, messages, pictures, videos, etc.

The memory 1101 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic storage, flash memory, magnetic disk or optical disk.

The processor 1102 is coupled to the memory 1101 and is used to execute the computer program in the memory 1101, so as to: identify a hand key point of a user from a binocular image obtained by taking a hand by a binocular camera; calculate a fingertip coordinate by using a binocular positioning algorithm, based on a position of the hand key point in the binocular image; compare the fingertip coordinate with at least one virtual input interface in the virtual scene; if the fingertip position and a target virtual input interface in the at least one virtual input interface satisfy a set position rule, determine the user performs an input operation via the target virtual input interface.

Further optionally, when identifying a hand key point of a user from a binocular image obtained by taking a hand by a binocular camera, the processor 1102 is specifically used to: for any monocular image in the binocular image, detect a hand area from the monocular image by using a target detection algorithm; segment a foreground image corresponding to the hand area from the monocular image; and identify the foreground image by using a preset hand key point recognition model to obtain the hand key point in the monocular image.

Further optionally, when calculating a fingertip coordinate by using a binocular positioning algorithm, based on a position of the hand key point in the binocular image, the processer 1102 is specifically used to: for any finger of the user, determine whether the identified hand key point comprises a fingertip joint point of the finger; if the hand key point comprises the fingertip joint point of the finger, calculate the position of the fingertip joint point of the finger in the virtual scene by using the binocular positioning algorithm according to the position of the fingertip joint point in the binocular image as the fingertip coordinate of the finger.

Further optionally, the processor 1102 is further used to: if the hand key point does not comprise the fingertip joint point of the finger, calculate a bending angle of the finger according to the position of the visible key point on the finger in the binocular image and a finger joint associated feature when performing the input operation; calculate the fingertip coordinate of the finger according to the bending angle of the finger and the position of the visible key point on the finger in the binocular image.

Further optionally, the finger includes: a first knuckle close to a palm, a second knuckle connected to the first knuckle, and a fingertip knuckle connected to the second knuckle; when calculating a bending angle of the finger according to the position of the visible key point on the finger in the binocular image and a finger joint associated feature when performing the input operation, the processor 1102 is specifically used to: determine an actual length of the first knuckle, the second knuckle, and the fingertip knuckle of the finger respectively; calculate an observed length of the first knuckle, the second knuckle and the fingertip knuckle respectively according to the identified coordinate of the hand key point; if the observed length of the second knuckle and/or the fingertip knuckle is less than the corresponding actual length, determine the bending angle of the finger is less than 90 degrees, and calculating the bending angle of the finger according to the observed length and the actual length of the second knuckle and/or according to the observed length and the actual length of the fingertip knuckle; if the observed length of the second knuckle and/or the fingertip knuckle is 0, determine the bending angle of the finger is 90 degrees.

Further optionally, when calculating the fingertip coordinate of the finger according to the bending angle of the finger and the position of the visible key point on the finger in the binocular image, the processor 1102 is specifically used to: if the bending angle of the finger is less than 90 degrees, calculate the fingertip coordinate of the finger according to a position of a starting joint point of the second knuckle, the bending angle of the finger, the actual length of the second knuckle and the actual length of the fingertip knuckle; if the bending angle of the finger is 90 degrees, calculate the fingertip position according to the position of the starting joint point of the second finger joint and a distance moved by the first finger joint to the at least one virtual input interface.

Further optionally, if the fingertip position and a target virtual input interface in the at least one virtual input interface satisfy a set position rule, determining the user performs an input operation via the target virtual input interface, the processer 1102 is specifically used to: if the fingertip position is located on the target virtual input interface, determine the user is touching the target virtual input interface; and/or, if the fingertip position is located on a side of the target virtual input interface away from the user and a distance between the fingertip and the target virtual input interface is greater than a preset distance threshold, determine the user is clicking on the target virtual input interface.

Further optionally, an infrared sensor is installed on the smart device. The processer 1102 further used to: collect a distance value between the infrared sensor and the hand key point by using the infrared sensor; correct the calculated fingertip position of the user by using the distance value.

The memory in FIG. 11 above can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic storage, flash memory, magnetic disk or optical disk.

The display 1103 in FIG. 11 includes a screen, and the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation.

The audio component 1104 in FIG. 11 may be configured to output and/or input audio signals. For example, the audio component includes a microphone (MIC), and when the device where the audio component is located is in an operation mode, such as a call mode, a recording mode, and a voice recognition mode, the microphone is configured to receive an external audio signal. The received audio signal may be further stored in a memory or transmitted via a communication component. In some embodiments, the audio component further includes a speaker for outputting audio signals.

Furthermore, as shown in FIG. 11, the electronic device also includes: a communication component 1105, a power supply component 1106 and other components. FIG. 11 only schematically shows some components, which does not mean that the electronic device only includes the components shown in FIG. 11.

The communication component 1105 in FIG. 11 is configured to facilitate wired or wireless communication between the device where the communication component is located and other devices. The device where the communication component is located can access a wireless network based on communication standards, such as WiFi, 2G, 3G, 4G or 5G, or a combination thereof. In an exemplary embodiment, the communication component receives a broadcast signal or broadcast-related information from an external broadcast management system via a broadcast channel. In an exemplary embodiment, the communication component may be implemented based on near field communication (NFC) technology, radio frequency identification (RFID) technology, infrared data association (IrDA) technology, ultra-wide bandwidth (UWB) technology, Bluetooth (BT) technology and other technologies.

The power supply component 1106 provides power to various components of the device where the power supply component is located. The power supply assembly may include a power management system, one or more power supplies, and other components associated with generating, managing, and distributing power to the device in which the power supply assembly is located.

In this embodiment, the terminal device can calculate the fingertip coordinate based on the position of the identified hand key point using a binocular positioning algorithm, and compare the fingertip coordinate with at least one virtual input interface in the virtual scene. If the fingertip position and the target virtual input interface in at least one virtual input interface meet the set position rules, it is determined that the user performs an input operation through the target virtual input interface. In this way, the fingertip position of the user can be calculated through a binocular positioning algorithm, and the user does not need to interact with a real-world controller or a special sensor device, further enhancing the immersion and realism of the virtual scene. In this way, the fingertip position of the user s can be calculated through a binocular positioning algorithm, and the user does not need to interact with a real-world controller or special a sensor device, further enhancing the immersion and realism of the virtual scene.

Accordingly, an embodiment of the present disclosure also provides a computer-readable storage medium storing a computer program, which, when executed, can implement each step that can be executed by a terminal device in the above method embodiment.

Those skilled in the art should know that the embodiment of the present disclosure may be provided as a method, a system or a computer program product. Therefore, the present disclosure may adopt a form of pure hardware embodiment, pure software embodiment and combined software and hardware embodiment. Moreover, the present disclosure may adopt a form of computer program product implemented on one or more computer-available storage media (including, but not limited to, a disk memory, a Compact Disc Read-Only Memory (CD-ROM) and an optical memory) including computer-available program codes.

The present disclosure is described with reference to flowcharts and/or block diagrams of the method, a device (system) and computer program product according to the embodiment of the present disclosure. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of another programmable data processing device to generate a machine, so that an apparatus for realizing a function specified in one flow or more flows in the flowcharts and/or one block or more blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction apparatus may be generated by the instructions stored in the computer-readable memory, the instruction apparatus realizing the function specified in one flow or many flows in the flowcharts and/or one block or many blocks in the block diagrams.

These computer program instructions may further be loaded onto the computer or the other programmable data processing device, so that a series of operating steps are executed on the computer or the other programmable data processing device to generate processing implemented by the computer, and steps for realizing the function specified in one flow or many flows in the flowcharts and/or one block or many blocks in the block diagrams are provided by the instructions executed on the computer or the other programmable data processing device.

In a typical configuration, a computing device includes one or more processors (CPUs), an input/output interface, a network interface, and a memory.

The memory may include a non-permanent memory, a random access memory (RAM), and/or a non-volatile memory in a computer-readable medium, such as a read-only memory (ROM) or a flash RAM. The memory is an example of a computer-readable medium.

The computer-readable medium includes permanent and non-permanent, mobile and non-mobile media, which may implement information storage by any method or technology. The information may be a computer-readable instruction, a data structure, a program module, or other data. Examples of computer storage media include, but are not limited to, a phase change RAM (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disk (DVD) or other optical memories, a magnetic tape cartridge, a magnetic tape storage device or other magnetic storage devices or any other non-transmission media, which may be used to store information accessible by a computing device. As defined herein, the computer-readable medium does not include non-transitory computer-readable media such as modulated data signals and carrier waves.

It is also to be noted that terms "include", "contain" or any other variants thereof are intended to include nonexclusive inclusions, thereby ensuring that a commodity or system including a series of elements not only includes those elements but also includes other elements which are not clearly listed or further includes elements intrinsic to the commodity or the system. Under the condition of no more restrictions, an element defined by statement "including a/an" does not exclude existence of another element which is the same in a commodity or system including the element.

Other embodiments not detailed in this description might still fall under the scope of the invention, as defined by the appended claims.

## Claims

1. An input recognition method in virtual scene, applied to a smart device, comprising:
identifying a hand key point of a user from a binocular image obtained by taking a hand by a binocular camera;
calculating a fingertip coordinate by using a binocular positioning algorithm, based on a position of the hand key point in the binocular image;
comparing the fingertip coordinate with at least one virtual input interface in the virtual scene;
if the fingertip position and a target virtual input interface in the at least one virtual input interface satisfy a set position rule, determining the user performs an input operation via the target virtual input interface;
wherein the calculating a fingertip coordinate by using a binocular positioning algorithm, based on a position of the hand key point in the binocular image, comprises:
for any finger of the user, determining whether the identified hand key point comprises a fingertip joint point of the finger;
if the hand key point comprises the fingertip joint point of the finger, calculating the position of the fingertip joint point of the finger in the virtual scene by using the binocular positioning algorithm according to the position of the fingertip joint point in the binocular image as the fingertip coordinate of the finger;
the method further comprises:
if the hand key point does not comprise the fingertip joint point of the finger, calculating a bending angle of the finger according to the position of the visible key point on the finger in the binocular image and a finger joint associated feature when performing the input operation;
calculating the fingertip coordinate of the finger according to the bending angle of the finger and the position of the visible key point on the finger in the binocular image;
wherein the method is **characterised in that** the finger comprises: a first knuckle close to a palm, a second knuckle connected to the first knuckle, and a fingertip knuckle connected to the second knuckle;
the calculating a bending angle of the finger according to the position of the visible key point on the finger in the binocular image and a finger joint associated feature when performing the input operation, comprises:
determining an actual length of the first knuckle, the second knuckle, and the fingertip knuckle of the finger respectively;
calculating an observed length of the first knuckle, the second knuckle and the fingertip knuckle respectively according to the identified coordinate of the hand key point;
if the observed length of the second knuckle and/or the fingertip knuckle is less than the corresponding actual length, determining the bending angle of the finger is less than 90 degrees, and calculating the bending angle of the finger according to the observed length and the actual length of the second knuckle and/or according to the observed length and the actual length of the fingertip knuckle;
if the observed length of the second knuckle and/or the fingertip knuckle is 0, determining the bending angle of the finger is 90 degrees.

2. The method according to claim 1, wherein the identifying a hand key point of a user from a binocular image obtained by taking a hand by a binocular camera, comprises:
for any monocular image in the binocular image, detecting a hand area from the monocular image by using a target detection algorithm;
segmenting a foreground image corresponding to the hand area from the monocular image; and
identifying the foreground image by using a preset hand key point recognition model to obtain the hand key point in the monocular image.

3. The method according to claim 1, wherein the calculating the fingertip coordinate of the finger according to the bending angle of the finger and the position of the visible key point on the finger in the binocular image, comprises:
if the bending angle of the finger is less than 90 degrees, calculating the fingertip coordinate of the finger according to a position of a starting joint point of the second knuckle, the bending angle of the finger, the actual length of the second knuckle and the actual length of the fingertip knuckle;
if the bending angle of the finger is 90 degrees, calculating the fingertip position according to the position of the starting joint point of the second finger joint and a distance moved by the first finger joint to the at least one virtual input interface.

4. The method according to claim 1, wherein if the fingertip position and a target virtual input interface in the at least one virtual input interface satisfy a set position rule, determining the user performs an input operation via the target virtual input interface, comprises:
if the fingertip position is located on the target virtual input interface, determining the user is touching the target virtual input interface; and/or,
if the fingertip position is located on a side of the target virtual input interface away from the user and a distance between the fingertip and the target virtual input interface is greater than a preset distance threshold, determining the user is clicking on the target virtual input interface.

5. The method according to any one of claims 1 to 4, wherein an infrared sensor is installed on the smart device; the method further comprises:
collecting a distance value between the infrared sensor and the hand key point by using the infrared sensor;
correcting the calculated fingertip position of the user by using the distance value.

6. A terminal device, comprising: a memory and a processor;
wherein, the memory is used to: store one or more computer instructions;
the processor is used to execute the one or more computer instructions to: perform the steps in the method according to any one of claims 1 to 5.

7. A computer-readable storage medium storing a computer program, wherein when the computer program is executed by a processor, the processor is caused to implement the steps in the method according to any one of claims 1 to 5.

## Patentansprüche

1. Ein Verfahren zur Eingabenerkennung in einer virtuellen Szene, das auf ein Smart-Gerät angewendet wird, mit den folgenden Schritten:
das Identifizieren eines Hand-Schlüsselpunkts eines Benutzers aus einem binokularen Bild, das durch das Aufnehmen der Hand mit einer binokularen Kamera gewonnen wurde;
Berechnen einer Fingerspitzenkoordinate unter der Verwendung eines binokularen Positionierungsalgorithmus auf der Grundlage einer Position des Hand-Schlüsselpunkts im binokularen Bild;
das Vergleichen der Fingerspitzenkoordinate mit mindestens einer virtuellen Eingabeschnittstelle in der virtuellen Szene;
falls die Fingerspitzenposition und eine Ziel-Eingabeschnittstelle unter den mindestens einen virtuellen Eingabeschnittstellen eine festgelegte Positionsregel erfüllen, das Feststellen, dass der Benutzer einen Eingabevorgang über die Ziel-Eingabeschnittstelle ausführt;
wobei das Berechnen einer Fingerspitzenkoordinate unter der Verwendung eines binokularen Positionierungsalgorithmus auf der Grundlage einer Position des Hand-Schlüsselpunkts im binokularen Bild Folgendes umfasst:
für jeden Finger des Benutzers zu ermitteln, ob der identifizierte Hand-Schlüsselpunkt einen Fingerspitzen-Gelenkpunkt des Fingers umfasst;
falls der Hand-Schlüsselpunkt den Fingerspitzen-Gelenkpunkt des Fingers umfasst, das Berechnen der Position des Fingerspitzen-Gelenkpunkts des Fingers in der virtuellen Szene unter der Verwendung des binokularen Positionierungsalgorithmus entsprechend der Position des Fingerspitzen-Gelenkpunkts im binokularen Bild als Fingerspitzenkoordinate des Fingers;
das Verfahren umfasst ferner:
falls der Hand-Schlüsselpunkt nicht den Fingerspitzen-Gelenkpunkt des Fingers umfasst, das Berechnen eines Beugewinkels des Fingers anhand der Position des sichtbaren Schlüsselpunkts auf dem Finger im binokularen Bild und eines mit dem Fingergelenk verbundenen Merkmals bei der Durchführung des Eingabevorgangs;
das Berechnen der Fingerspitzenkoordinate des Fingers anhand des Beugewinkels des Fingers und der Position des sichtbaren Schlüsselpunkts auf dem Finger im binokularen Bild;
wobei das Verfahren **dadurch gekennzeichnet ist, dass** der Finger umfasst: das erste Fingergelenk nahe der Handfläche, das zweite Fingergelenk, das mit dem ersten Fingergelenk verbunden ist, und das Fingerspitzen-Gelenk, das mit dem zweiten Fingergelenk verbunden ist;
wobei das Berechnen eines Beugewinkels des Fingers anhand der Position des sichtbaren Schlüsselpunkts auf dem Finger im binokularen Bild und eines mit dem Fingergelenk verbundenen Merkmals bei der Durchführung des Eingabevorgangs umfasst:
das Bestimmen einer tatsächlichen Länge des ersten Knöchels, des zweiten Knöchels und des Fingerspitzenknöchels des Fingers;
das Berechnen einer beobachteten Länge des ersten Knöchels, des zweiten Knöchels und des Fingerspitzenknöchels entsprechend der identifizierten Koordinate des Hand-Schlüsselpunkts;
falls die beobachtete Länge des zweiten Fingergelenks und/oder des Fingerspitzen-Fingergelenks kleiner ist als die entsprechende tatsächliche Länge, wird festgestellt, dass der Beugewinkel des Fingers kleiner als 90 Grad ist, und der Beugewinkel des Fingers wird anhand der beobachteten Länge und der tatsächlichen Länge des zweiten Fingergelenks und/oder anhand der beobachteten Länge und der tatsächlichen Länge des Fingerspitzen-Fingergelenks berechnet;
wenn die gemessene Länge des zweiten Fingergelenks und/oder des Fingerspitzen-Gelenks 0 beträgt, wird der Beugewinkel des Fingers auf 90 Grad festgelegt.

2. Das Verfahren nach dem Anspruch 1, wobei das Identifizieren eines Hand-Schlüsselpunkts eines Benutzers aus einem binokularen Bild, das durch das Aufnehmen einer Hand mit einer binokularen Kamera erhalten wurde, umfasst:
für jedes monokulare Bild im binokularen Bild das Erkennen eines Handbereichs aus dem monokularen Bild unter der Verwendung eines Zielerkennungsalgorithmus;
das Segmentieren eines dem Handbereich entsprechenden Vordergrundbildes aus dem monokularen Bild; und
das Identifizieren des Vordergrundbildes unter der Verwendung eines voreingestellten Erkennungsmodells für Hand-Schlüsselpunkte, um den Hand-Schlüsselpunkt im monokularen Bild zu ermitteln.

3. Das Verfahren nach dem Anspruch 1, wobei das Berechnen der Fingerspitzenkoordinate des Fingers anhand des Beugewinkels des Fingers und der Position des sichtbaren Orientierungspunkts auf dem Finger im binokularen Bild Folgendes umfasst:
wenn der Beugewinkel des Fingers kleiner als 90 Grad ist, das Berechnen der Fingerspitzenkoordinate des Fingers anhand einer Position eines Startgelenkpunkts des zweiten Fingergelenks, des Beugewinkels des Fingers, der tatsächlichen Länge des zweiten Fingergelenks und der tatsächlichen Länge des Fingerspitzen-Gelenks;
wenn der Beugewinkel des Fingers 90 Grad beträgt, das Berechnen der Fingerspitzenposition anhand der Position des Startgelenkpunkts des zweiten Fingergelenks und eines Abstands, um den sich das erste Fingergelenk zur mindestens einen virtuellen Eingabeschnittstelle bewegt hat.

4. Das Verfahren nach dem Anspruch 1, bei dem, wenn die Fingerspitzenposition und eine virtuelle Ziel-Eingabeschnittstelle innerhalb der mindestens einen virtuellen Eingabeschnittstelle eine festgelegte Positionsregel erfüllen, festgestellt wird, dass der Benutzer einen Eingabevorgang über die virtuelle Ziel-Eingabeschnittstelle ausführt, wobei das Verfahren umfasst:
wenn sich die Fingerspitzenposition auf der virtuellen Ziel-Eingabeschnittstelle befindet, wird festgestellt, dass der Benutzer die virtuelle Ziel-Eingabeschnittstelle berührt; und/oder
wenn sich die Fingerspitzenposition auf einer vom Benutzer abgewandten Seite der virtuellen Ziel-Eingabeschnittstelle befindet und ein Abstand zwischen der Fingerspitze und der virtuellen Ziel-Eingabeschnittstelle größer ist als ein voreingestellter Abstandsschwellenwert, wird festgestellt, dass der Benutzer auf die virtuelle Ziel-Eingabeschnittstelle klickt.

5. Das Verfahren nach einem der Ansprüche 1 bis 4, wobei auf dem Smart-Gerät ein Infrarotsensor angebracht ist; wobei das Verfahren ferner umfasst:
das Erfassen eines Abstandswerts zwischen dem Infrarotsensor und dem Schlüsselpunkt der Hand unter der Verwendung des Infrarotsensors;
das Korrigieren der berechneten Fingerspitzenposition des Benutzers unter der Verwendung des Abstandswerts.

6. Ein Endgerät, umfassend: einen Speicher und einen Prozessor;
wobei der Speicher dazu dient, eine oder mehrere Computeranweisungen zu speichern;
der Prozessor dazu dient, die eine oder mehreren Computeranweisungen auszuführen, um die Schritte des Verfahrens gemäß einem der Ansprüche 1 bis 5 durchzuführen.

7. Ein computerlesbares Speichermedium, das ein Computerprogramm enthält, wobei, wenn das Computerprogramm von einem Prozessor ausgeführt wird, der Prozessor veranlasst wird, die Schritte des Verfahrens gemäß einem der Ansprüche 1 bis 5 auszuführen.

## Revendications

1. Procédé de reconnaissance d'entrée dans une scène virtuelle, appliqué à un dispositif intelligent, comprenant :
l'identification d'un point clé de la main d'un utilisateur à partir d'une image binoculaire obtenue en capturant une main au moyen d'une caméra binoculaire ;
le calcul d'une coordonnée du bout du doigt au moyen d'un algorithme de positionnement binoculaire, sur la base d'une position du point clé de la main dans l'image binoculaire ;
la comparaison de la coordonnée du bout du doigt avec au moins une interface d'entrée virtuelle dans la scène virtuelle ;
si la position du bout du doigt et une interface d'entrée virtuelle cible parmi l'au moins une interface d'entrée virtuelle satisfont à une règle de position définie, la détermination que l'utilisateur effectue une opération d'entrée via l'interface d'entrée virtuelle cible ;
dans lequel le calcul d'une coordonnée du bout du doigt au moyen d'un algorithme de positionnement binoculaire, sur la base d'une position du point clé de la main dans l'image binoculaire, comprend :
pour tout doigt de l'utilisateur, la détermination du fait que le point clé de la main identifié comprend ou non un point d'articulation du bout du doigt ;
si le point clé de la main comprend le point d'articulation du bout du doigt, le calcul de la position du point d'articulation du bout du doigt dans la scène virtuelle au moyen de l'algorithme de positionnement binoculaire, selon la position du point d'articulation du bout du doigt dans l'image binoculaire, en tant que coordonnée du bout du doigt ;
le procédé comprenant en outre :
si le point clé de la main ne comprend pas le point d'articulation du bout du doigt, le calcul d'un angle de flexion du doigt selon la position du point clé visible sur le doigt dans l'image binoculaire et une caractéristique associée à l'articulation du doigt lors de l'exécution de l'opération d'entrée;
le calcul de la coordonnée du bout du doigt selon l'angle de flexion du doigt et la position du point clé visible sur le doigt dans l'image binoculaire ;
dans lequel le procédé est **caractérisé en ce que** le doigt comprend : une première phalange proche de la paume, une deuxième phalange reliée à la première phalange, et une phalange du bout du doigt reliée à la deuxième phalange ;
le calcul d'un angle de flexion du doigt selon la position du point clé visible sur le doigt dans l'image binoculaire et une caractéristique associée à l'articulation du doigt lors de l'exécution de l'opération d'entrée, comprend :
la détermination d'une longueur réelle de la première phalange, de la deuxième phalange et de la phalange du bout du doigt du doigt, respectivement ;
le calcul d'une longueur observée de la première phalange, de la deuxième phalange et de la phalange du bout du doigt, respectivement, selon la coordonnée identifiée du point clé de la main;
si la longueur observée de la deuxième phalange et/ou de la phalange du bout du doigt est inférieure à la longueur réelle correspondante, la détermination que l'angle de flexion du doigt est inférieur à 90 degrés, et le calcul de l'angle de flexion du doigt selon la longueur observée et la longueur réelle de la deuxième phalange et/ou selon la longueur observée et la longueur réelle de la phalange du bout du doigt ;
si la longueur observée de la deuxième phalange et/ou de la phalange du bout du doigt est égale à 0, la détermination que l'angle de flexion du doigt est de 90 degrés.

2. Procédé selon la revendication 1, dans lequel l'identification d'un point clé de la main d'un utilisateur à partir d'une image binoculaire obtenue en capturant une main au moyen d'une caméra binoculaire, comprend :
pour toute image monoculaire de l'image binoculaire, la détection d'une zone de la main à partir de l'image monoculaire au moyen d'un algorithme de détection de cible ;
la segmentation d'une image de premier plan correspondant à la zone de la main à partir de l'image monoculaire ; et
l'identification de l'image de premier plan au moyen d'un modèle prédéfini de reconnaissance des points clés de la main afin d'obtenir le point clé de la main dans l'image monoculaire.

3. Procédé selon la revendication 1, dans lequel le calcul de la coordonnée du bout du doigt selon l'angle de flexion du doigt et la position du point clé visible sur le doigt dans l'image binoculaire, comprend :
si l'angle de flexion du doigt est inférieur à 90 degrés, le calcul de la coordonnée du bout du doigt selon une position d'un point d'articulation de départ de la deuxième phalange, l'angle de flexion du doigt, la longueur réelle de la deuxième phalange et la longueur réelle de la phalange du bout du doigt ;
si l'angle de flexion du doigt est de 90 degrés, le calcul de la position du bout du doigt selon la position du point d'articulation de départ de la deuxième articulation du doigt et une distance parcourue par la première articulation du doigt jusqu'à l'au moins une interface d'entrée virtuelle.

4. Procédé selon la revendication 1, dans lequel, si la position du bout du doigt et une interface d'entrée virtuelle cible parmi l'au moins une interface d'entrée virtuelle satisfont à une règle de position définie, la détermination que l'utilisateur effectue une opération d'entrée via l'interface d'entrée virtuelle cible, comprend :
si la position du bout du doigt est située sur l'interface d'entrée virtuelle cible, la détermination que l'utilisateur touche l'interface d'entrée virtuelle cible ; et/ou,
si la position du bout du doigt est située sur un côté de l'interface d'entrée virtuelle cible éloigné de l'utilisateur et qu'une distance entre le bout du doigt et l'interface d'entrée virtuelle cible est supérieure à un seuil de distance prédéfini, la détermination que l'utilisateur clique sur l'interface d'entrée virtuelle cible.

5. Procédé selon l'une quelconque des revendications 1 à 4, dans lequel un capteur infrarouge est installé sur le dispositif intelligent ; le procédé comprenant en outre :
la collecte d'une valeur de distance entre le capteur infrarouge et le point clé de la main au moyen du capteur infrarouge ;
la correction de la position calculée du bout du doigt de l'utilisateur au moyen de la valeur de distance.

6. Dispositif terminal, comprenant : une mémoire et un processeur ;
dans lequel, la mémoire est utilisée pour : stocker une ou plusieurs instructions informatiques ;
le processeur est utilisé pour exécuter les une ou plusieurs instructions informatiques afin de : mettre en œuvre les étapes du procédé selon l'une quelconque des revendications 1 à 5.

7. Support de stockage lisible par ordinateur stockant un programme informatique, dans lequel, lorsque le programme informatique est exécuté par un processeur, le processeur est amené à mettre en œuvre les étapes du procédé selon l'une quelconque des revendications 1 à 5.
